# EUROPEAN PATENT SPECIFICATION

(11) **EP 3 557 940 B1**
(45) Date of publication and mention of the grant of the patent: **01.09.2021**
(21) Application number: 16924352.4
(22) Date of filing: 22.12.2016
(51) Int. Cl.: H04W 76/28, H04W 52/02

(54) **COMMUNICATION METHOD, TERMINAL DEVICE AND COMPUTER READABLE MEDIUM**
KOMMUNIKATIONSVERFAHREN, ENDGERÄTEVORRICHTUNG UND COMPUTERLESBARES MEDIUM
PROCÉDÉ DE COMMUNICATION, DISPOSITIF TERMINAL ET SUPPORT LISIBLE PAR ORDINATEUR

(43) Date of publication of application: 23.10.2019
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN)
(74) Representative: Manitz Finsterwald Patent- und Rechtsanwaltspartnerschaft mbB
(86) International application number: PCT/CN2016/111580
(87) International publication number: WO 2018/112850

(56) References cited:
- WO-A1-2013/172672
- WO-A1-2015/034403
- WO-A1-2016/184500
- CN-A- 102 769 842
- CN-A- 103 109 570
- CN-A- 103 428 773
- CN-A- 104 219 738
- CN-A- 105 813 177
- US-A1- 2012 207 069
- US-A1- 2013 308 511
- US-A1- 2016 345 379
- "3GPP TS 36.321, V8.1.0, Medium Access Control Protocol Specification", 1 March 2008 (2008-03-01), 20080301, XP002521730, * Section 5.7 *
- LG ELECTRONICS: "Solution for Key issue 3 Mobility Framework Solution for UE Power Saving Function", 3GPP SA WG2 Meeting S2#114 S2-161551, 5 April 2016 (2016-04-05), XP051086538,

## Description

### TECHNICAL FIELD

Embodiments of the disclosure relate to the field of communications, and more particularly to a communication method, a terminal device and a computer-readable medium.

### BACKGROUND

With development of a mobile communication technology, a fifth-Generation (5G) technology is under research at present. In the 5G technology, a terminal device may receive data in a Discontinuous Reception (DRX) manner to reduce electric energy consumption of the terminal device. It is necessary to determine a DRX parameter at first before performing the discontinuous reception. How to determine a DRX parameter in the 5G technology is a problem to be researched. The features of the preamble of the independent claims are known from US2012/207069 A1 and the related technology is known from US2013/308511.

### SUMMARY

The invention is set out in the appended set of claims. defined in the independent claims, and the preferable features of the present invention are defined in the dependent claims.

### BRIEF DESCRIPTION OF DRAWINGS

FIG. 1 is a schematic diagram of a communication system according to an example of the disclosure.
FIG. 2 is a schematic flowchart of a communication method according to an example of the disclosure.
FIG. 3 is a schematic diagram of a DRX cycle.
FIG. 4 is a schematic flowchart of data retransmission.
FIG. 5 is a schematic flowchart of a communication method according to an example of the disclosure.
FIG. 6 is a schematic block diagram of a terminal device according to an example of the disclosure.
FIG. 7 is a schematic block diagram of a network device according to an example of the disclosure.
FIG. 8 is a schematic block diagram of a terminal device according to an example of the disclosure.
FIG. 9 is a schematic block diagram of a network device according to an example of the disclosure.
FIG. 10 is a schematic block diagram of a system chip according to an example of the disclosure.

### DETAILED DESCRIPTION

The technical solutions in the embodiments of the disclosure will be described below in combination with the drawings in the embodiments of the disclosure.

The technical solutions of the embodiments of the disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system or a future 5G system.

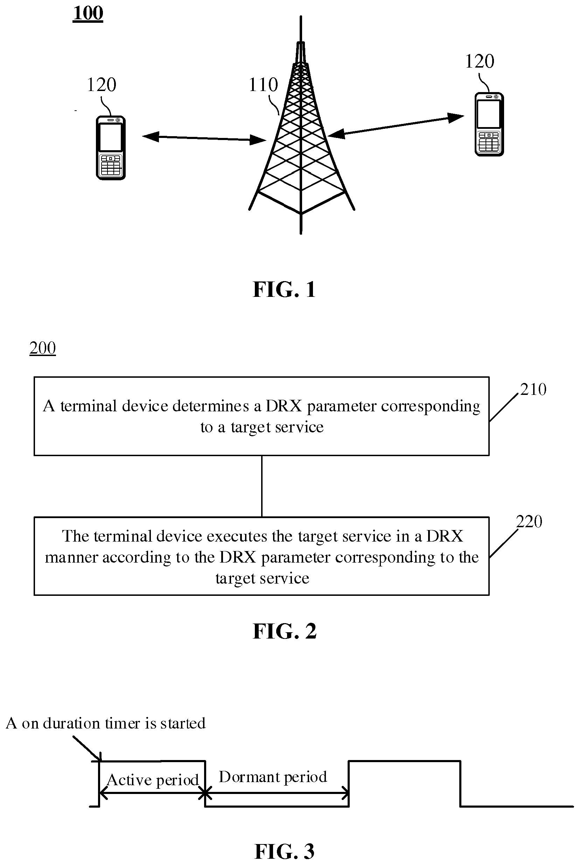

FIG. 1 illustrates a wireless communication system 100 to which the embodiments of the disclosure are applied. The wireless communication system 100 may include a network device 110. The network device 110 may be a device communicating with a terminal device. The network device 110 may provide communication coverage for a specific geographical region and may communicate with a terminal device (for example, User Equipment (UE)) in the coverage. Optionally, the network device 110 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Or the network device may be a relay station, an access point, a vehicle-mounted device, a wearable device, a network-side device in a future 5G network, a network device in a future evolved Public Land Mobile Network (PLMN) or the like.

The wireless communication system 100 further includes at least one terminal device 120 within the coverage of the network device 110. The terminal devices 120 may be mobile or fixed. Optionally, the terminal device 120 may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in the future 5G network, a terminal device in the future evolved PLMN or the like.

Optionally, the 5G system or network may also be called a New Radio (NR) system or network.

It is to be understood that FIG. 1 only exemplarily illustrates a network device and two terminal devices. Optionally, the wireless communication system 100 may include multiple network devices and another number of terminal devices may be in coverage of each network device. There are no limits made thereto in the embodiments of the disclosure.

In the related art, a set of DRX parameters are configured for each terminal device through an RRC layer, that is, multiple services of the terminal device correspond to the same set of DRX parameters. However, different services of the terminal device have different requirements, for example, for some periodic services with relatively long periods, a sleep time needs to be set longer and for some services with relatively high real-time performance, the sleep time needs to be set shorter, In such case, use of the same set of DRX parameters is apparently unfavorable for execution of various types of services. Therefore, the embodiments of the disclosure disclose a communication method. In the method, a DRX parameter corresponding to a certain service of a terminal device may be directly determined, so that the method is more flexible than the related art. The communication method of the embodiments of the disclosure will be described below in combination with FIG. 2 and FIG. 3 in detail.

FIG. 2 is a schematic flowchart of a communication method according to an example of the disclosure. The method illustrated in FIG. 2 includes the following operations.

In 210, a terminal device determines a DRX parameter corresponding to a target service.

The target service may be a service to be executed by the terminal device. For example, the target service may be that the terminal device receives downlink data from a network device.

In addition, different target services may correspond to the same DRX parameter and may also correspond to different DRX parameters. For example, if two services have similar requirements on a data transmission delay, the two services may correspond to the same DRX parameter; and if the two services have greatly different requirements on the data transmission delay, the two services may correspond to different DRX parameters.

Information of a service type of the target service include at least one of: an LCID (Logical Channel Identifier) or logical channel group identifier corresponding to data of the target service, a QoS-Flow-ID (Quality of Service Flow Identifier) of data of the target service, or a DRB (Data Radio Bearer) carrying data of the target service.

Optionally, the method illustrated in FIG. 3 further includes that: the terminal device receives first indication information sent by a network device, here, the first indication information indicates the DRX parameter corresponding to the target service. After receiving the first indication information, the terminal device may directly determine the DRX parameter corresponding to the target service according to the first indication information, so that a process for determining the DRX parameter by the terminal device is simplified.

When the first indication information indicates the DRX parameter, there may be multiple implementation modes. Optionally, the first indication information may directly indicate an index of the DRX parameter corresponding to the target service in multiple preconfigured DRX parameters. In such a manner, the terminal device, after receiving the first indication information, may determine the index of the DRX parameter corresponding to the target service in the multiple preconfigured DRX parameters according to the first indication information and then determine the DRX parameter corresponding to the target service from multiple pre-stored DRX parameters according to the index.

When the first indication information indicates the DRX parameter in an index manner, the DRX parameter corresponding to the target service may be indicated only using a relatively small number of bits, so that not only the DRX parameter may be indicated, but also a certain signaling overhead may be reduced.

For example, 10 DRX parameters are preconfigured for the terminal device and the first indication information indicates that an index number of the DRX parameter corresponding to the target service in the 10 preconfigured DRX parameters is 5. The terminal device, after receiving the first indication information, may determine that the DRX parameter, of which an index number is 5, of the 10 preconfigured DRX parameters is the DRX parameter corresponding to the target service.

Optionally, the first indication information, in addition to indicating the index of the DRX parameter, may also directly indicate a value of the DRX parameter corresponding to the target service. In such a manner, the terminal device, after receiving the first indication information, may directly determine the value of the DRX parameter corresponding to the target service. In such case, the terminal device is not required to preconfigure the multiple DRX parameters because the terminal device may directly determine the value of the DRX parameter corresponding to the target service through the first indication information. Compared with the manner of indicating the index of DRX parameter corresponding to the target service, this manner has the advantage that the value of the DRX parameter corresponding to the target service may be determined more rapidly.

Optionally, the first indication information may be carried in a Downlink Control Information (DCI) or a Media Access Control Control Element (MAC CE). When the first indication information is carried in the DCI or the MAC CE, the DRX parameter corresponding to the target service may be dynamically indicated and determined through the first indication information.

The terminal device, in addition to determining the DRX parameter corresponding to the target service according to an indication of the network device, also directly determines the DRX parameter corresponding to the target service from the multiple preconfigured DRX parameters according to a service type of the target service and correspondences between service types and DRX parameters. The multiple preconfigured DRX parameters are parameters previously configured by the network device for the terminal device through configuration signaling.

Specifically, the three pieces of information, i.e., a logical channel (or logical channel group) identifier corresponding to data of the target service, a QoS-Flow-ID of data of the target service and a DRB carrying data of the target service, may all have a certain correspondence with DRX. That is, the same DRX parameter may correspond to the three pieces of information. Specifically, a DRX parameter may correspond to an LCID (logical channel group identifier), a QoS-Flow-ID and a DRB. The terminal, when determining the DRX parameter, may determine the DRX parameter corresponding to the target service according to the correspondence between any one of the three pieces of information and a DRX parameter.

For example, data for a first logical channel corresponds to a first set of DRX parameters, data for a second logical channel corresponds to a second set of DRX parameters and data for a third logical channel corresponds to a third set of DRX parameters. When the data of the target service belongs to the first logical channel, the DRX parameter corresponding to the target service is the first set of DRX parameters.

In addition, when the target service is a voice service, because of periodicity of a voice packet, the terminal device may rapidly enter a dormant period to achieve a power saving effect. In such case, the terminal device, when determining the DRX parameter corresponding to the target service, may determine a DRX parameter with a relatively short DRX inactivity timer as the DRX parameter corresponding to the target service, so that the terminal device rapidly enters the dormant period when receiving data in a DRX manner.

When the target service is a downloading service, a base station may persistently schedule the terminal device for a period of time. In such case, a relatively long DRX inactivity timer is favorable for quicker response of the terminal device. Therefore, the terminal device may determine a DRX parameter with the relatively long DRX inactivity timer as the DRX parameter corresponding to the target service.

Since different service types have different requirements, it is necessary to configure different DRX parameters for different services. Moreover, the DRX parameter is determined according to the service type, which may improve a user experience and ensure QoS.

The service type of the target service is acquired from second indication information received by the terminal device from the network device, and in such case, the second indication information indicates the service type of the target service. In addition, the second indication information may specifically be index information, and the second indication information may specifically indicate index information of the service type of the target service in multiple service types. Specifically, if there exist totally 10 service types, the 10 service types correspond to index numbers 1-10, and in such case, the second indication information, when indicating the service type, may directly indicate an index number of the service type of the target service in the 10 service types.

In 220, the terminal device executes the target service in a DRX manner according to the DRX parameter corresponding to the target service.

In the related art, a DRX parameter is configured for each terminal device (MAC entity) through the RRC layer, that is, different services of the terminal device correspond to the same set of DRX parameters. Since transmission requirements for different service types may be different, it is unsuitable to use the same set of DRX parameters for different services. In the disclosure, a manner for determining the DRX parameter is more flexible, and for example, DRX parameters corresponding to respective services may be determined according to different service types.

Optionally, the DRX parameter may include at least one of: an on duration timer, a DRX-inactivity timer, a DRX-retransmission timer, a long DRX-cycle start offset, a short DRX-cycle, or a DRX-short cycle timer. It is to be understood that DRX parameters corresponding to different services may include different types of parameters. For example, DRX parameters corresponding to some services with relatively low requirements may include only one of the above parameters and DRX parameters corresponding to some services with relatively high requirements may include at least two of the above parameters.

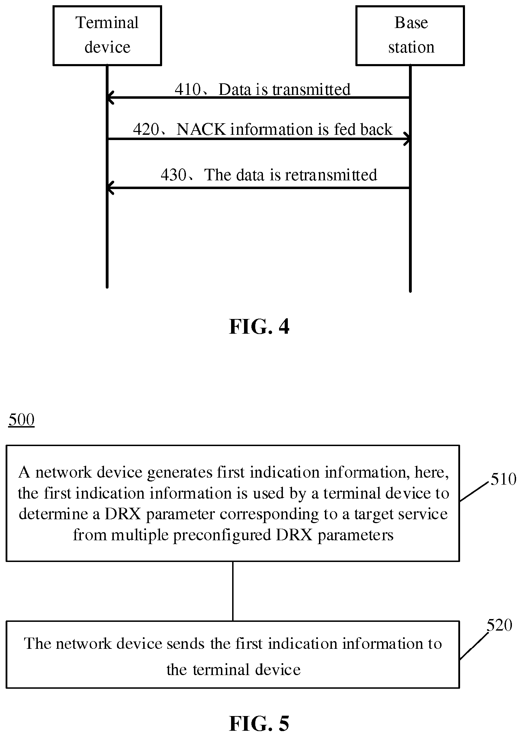

The DRX parameter will be described below in combination with FIG. 3 and FIG. 4.

As illustrated in FIG. 3, a complete DRX cycle consists of an active period and a dormant period. The on duration timer specifies the number of subframes for a Physical Downlink Control Channel (PDCCH) required to be monitored by the terminal device in each DRX cycle, and after time of the on duration timer is exceeded, the terminal device may turn off its receiver and enter a dormant state.

The DRX-inactivity timer specifies the number of subframes for the inactive PDCCH continuously monitored by the terminal device after the terminal device successfully decodes PDCCH indicating uplink or downlink initial transmission, and During the time of the DRX-inactivity timer, the terminal device may enter a DRX state only when the terminal device does not monitor the related PDCCH.

FIG. 4 illustrates a data retransmission process. The process includes the following operations.

In 410, the terminal device receives data.

The terminal device, after receiving the data, fails to decode the data, and starts a Hybrid Auto Repeat Request Round Trip Time (HARQ RTT) timer.

In 420, the terminal device feeds back Negative Acknowledgement (NACK) information to a base station.

In 430, the terminal device starts a DRX-retransmission timer and receives data retransmitted by the base station.

The HARQ RTT timer specifies the minimum number of subframes required by the terminal device before downlink data retransmission. The DRX-retransmission timer specifies the maximum number of subframes for the PDCCH required to be monitored by the terminal device when the terminal device waits for HARQ retransmission.

The communication method of the embodiments of the disclosure is described above in combination with FIG. 2 to FIG. 4 from the angle of the terminal device in detail and the communication method of the embodiments of the disclosure will be described below in combination with FIG. 5 from the angle of the network device in detail. It is to be understood that the communication method illustrated in FIG. 5 corresponds to the communication method illustrated in FIG. 2 to FIG. 4 and, for simplicity, repeated descriptions are properly omitted.

FIG. 5 is a schematic flowchart of a communication method according to an example of the disclosure. The method illustrated in FIG. 5 includes the following operations.

In 510, a network device generates first indication information, here, the first indication information is used by a terminal device to determine a DRX parameter corresponding to a target service from multiple preconfigured DRX parameters.

In 520, the network device sends the first indication information to the terminal device.

In the related art, the terminal device corresponds to only one set of DRX parameters, that is, different services of the terminal device correspond to the same set of DRX parameters. Since transmission requirements for different service types may be different, it is unsuitable to use the same set of DRX parameters for different service. In the disclosure, the DRX parameter corresponding to each service may be determined, which is more flexible than the related art.

In an example, the first indication information indicates the DRX parameter corresponding to the target service.

Specifically, the first indication information may indicate an index of the DRX parameter corresponding to the target service in the multiple preconfigured DRX parameters.

The first indication information may further indicate a value of the DRX parameter corresponding to the target service.

The first indication information indicates a service type of the target service.

Before the operation that the network device generates the first indication information, the method of FIG. 3 further includes that: the network device determines the DRX parameter corresponding to the target service from the multiple preconfigured DRX parameters according to a service type of the target service and correspondences between service types and DRX parameters.

Information of the service type of the target service includes at least one of: an LCID or logical channel group identifier corresponding to data of the target service, a QoS-Flow-ID of data of the target service, or a DRB carrying data of the target service.

Optionally, the first indication information is carried in a DCI or a MAC CE.

The method of FIG. 5 further includes that: the network device configures the multiple DRX parameters for the terminal device.

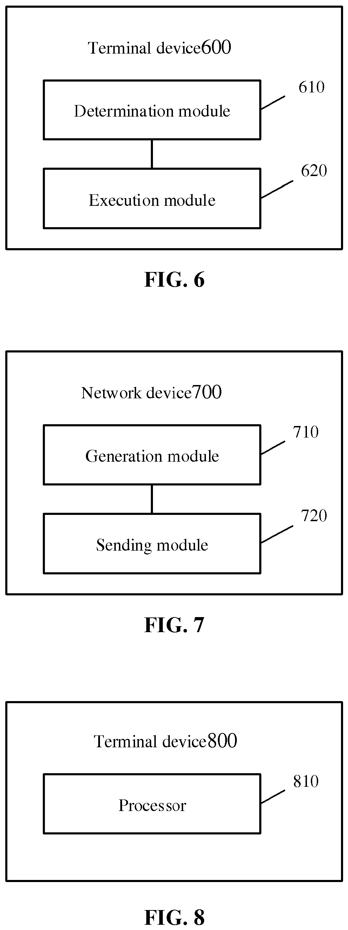

The communication method of the examples of the disclosure is described above in combination with FIG. 2 to 5 in detail and a terminal device and network device of the embodiments of the disclosure will be described below in combination with FIG. 6 to 9. It is to be understood that the terminal device and network device described in FIG. 6 to 9 may implement each operation of the communication methods described in FIG. 2 to 5. For simplicity, repeated descriptions are properly omitted.

FIG. 6 is a schematic block diagram of a terminal device according to an example of the disclosure. The terminal device 600 in FIG. 6 includes a determination module 610 and an execution module 620.

The determination module 610 is configured to determine a DRX parameter corresponding to a target service.

The execution module 620 is configured to execute the target service in a DRX manner according to the DRX parameter corresponding to the target service.

Optionally, as an embodiment, the terminal device 600 further includes a receiving module 630.

The receiving module 630 is configured to receive first indication information sent by a network device, here, the first indication information indicates the DRX parameter corresponding to the target service.

The determination module 610 is specifically configured to determine the DRX parameter corresponding to the target service according to the first indication information.

Optionally, as an example, the first indication information indicates an index of the DRX parameter corresponding to the target service in multiple preconfigured DRX parameters.

The determination module 610 is specifically configured to determine the DRX parameter corresponding to the target service according to the index of the DRX parameter corresponding to the target service in the multiple preconfigured DRX parameters.

Optionally, as an example, the first indication information is used to indicate a value of the DRX parameter corresponding to the target service.

The determination module 610 is specifically configured to determine the value of the DRX parameter corresponding to the target service according to the first indication information.

As an embodiment, the determination module 610 is specifically configured to determine the DRX parameter corresponding to the target service from multiple preconfigured DRX parameters according to a service type of the target service and correspondences between service types and DRX parameters.

As an embodiment, information of the service type of the target service includes at least one of: an LCID or logical channel group identifier corresponding to data of the target service, a QoS-Flow-ID of data of the target service, or a DRB carrying data of the target service.

As an embodiment, the terminal device 600 further includes the receiving module 630.

The receiving module 630 is configured to receive second indication information sent by the network device, here, the second indication information indicates the service type of the target service.

As an embodiment, the second indication information indicates an index of the service type of the target service in multiple service types.

Optionally, as an embodiment, the first indication information is carried in a DCI or a MAC CE.

Optionally, as an embodiment, the DRX parameter includes an on duration timer and a DRX-inactivity timer.

Optionally, as an embodiment, the DRX parameter further includes at least one of: a DRX-retransmission timer, a long DRX-cycle start offset, a short DRX-cycle, or a DRX-short cycle timer.

Optionally, as an embodiment, there is at least one parameter with different values, among DRX parameters corresponding to multiple services executable by the terminal device.

FIG. 7 is a schematic block diagram of a network device according to an example of the disclosure. The network device 700 in FIG. 7 includes a generation module 710 and a sending module 720.

The generation module 710 is configured to generate first indication information, here, the first indication information is used by a terminal device to determine a DRX parameter corresponding to a target service from multiple preconfigured DRX parameters.

The sending module 720 is configured to send the first indication information to the terminal device.

Optionally, as an example, the first indication information indicates the DRX parameter corresponding to the target service.

Optionally, as an example, the first indication information indicates an index of the DRX parameter corresponding to the target service in the multiple preconfigured DRX parameters.

Optionally, as an example, the first indication information indicates a value of the DRX parameter corresponding to the target service.

As an embodiment, the first indication information indicates a service type of the target service.

As an embodiment, before the network device generates the first indication information, the network device further includes a determination module 730.

The determination module 730 is configured to, before the network device generates the first indication information, determine the DRX parameter corresponding to the target service from the multiple preconfigured DRX parameters according to a service type of the target service and correspondences between service types and DRX parameters.

As an embodiment, information of the service type of the target service includes at least one of: an LCID or logical channel group identifier corresponding to data of the target service, a QoS-Flow-ID of data of the target service, or a DRB carrying data of the target service.

As an embodiment, the first indication information is carried in a DCI or a MAC CE.

Optionally, as an embodiment, the terminal device 600 further includes a configuration module 740.

The configuration module 740 is configured to configure the multiple DRX parameters for the terminal device.

FIG. 8 is a schematic block diagram of a terminal device according to an embodiment of the disclosure. The terminal device 800 illustrated in FIG. 8 includes a processor 810.

The processor 810 is configured to determine a DRX parameter corresponding to a target service.

The processor 810 is further configured to execute the target service in a DRX manner according to the DRX parameter corresponding to the target service.

Optionally, as an embodiment, the terminal device 800 further includes a transceiver 820.

The transceiver 820 is configured to receive first indication information sent by a network device, here, the first indication information indicates the DRX parameter corresponding to the target service.

The processor 810 is specifically configured to determine the DRX parameter corresponding to the target service according to the first indication information.

Optionally, as an embodiment, the first indication information indicates an index of the DRX parameter corresponding to the target service in multiple preconfigured DRX parameters.

The processor 810 is specifically configured to determine the DRX parameter corresponding to the target service according to the index of the DRX parameter corresponding to the target service in the multiple preconfigured DRX parameters.

Optionally, as an embodiment, the first indication information is used to indicate a value of the DRX parameter corresponding to the target service.

The processor 810 is specifically configured to determine the value of the DRX parameter corresponding to the target service according to the first indication information.

As an embodiment, the processor 810 is specifically configured to determine the DRX parameter corresponding to the target service from multiple preconfigured DRX parameters according to a service type of the target service and correspondences between service types and DRX parameters.

As an embodiment, information of the service type of the target service includes at least one of: an LCID or logical channel group identifier corresponding to data of the target service, a QoS-Flow-ID of data of the target service, or a DRB carrying data of the target service.

As an embodiment, the transceiver 820 is configured to receive second indication information sent by the network device, here, the second indication information indicates the service type of the target service.

As an embodiment, the second indication information indicates an index of the service type of the target service in multiple service types.

Optionally, as an embodiment, the first indication information is carried in a DCI or a MAC CE.

Optionally, as an embodiment, the DRX parameter includes at least one of: an on duration timer, a DRX-inactivity timer, a DRX-retransmission timer, a long DRX-cycle start offset, a short DRX-cycle, or a DRX-short cycle timer.

Optionally, as an embodiment, there is at least one parameter with different values, among DRX parameters corresponding to multiple services executable by the terminal device.

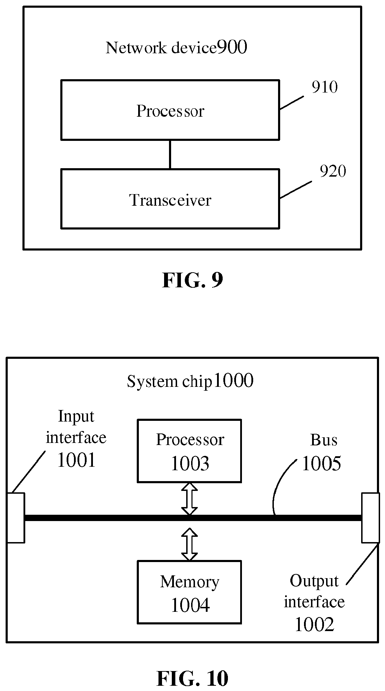

FIG. 9 is a schematic block diagram of a network device according to an example of the disclosure. The network device 900 illustrated in FIG. 9 includes a processor 910 and a transceiver 920.

The processor 910 is configured to generate first indication information, here, the first indication information is used by a terminal device to determine a DRX parameter corresponding to a target service from multiple preconfigured DRX parameters.

The transceiver 920 is configured to send the first indication information to the terminal device.

Optionally, as an example, the first indication information indicates the DRX parameter corresponding to the target service.

Optionally, as an example, the first indication information indicates an index of the DRX parameter corresponding to the target service in the multiple preconfigured DRX parameters.

Optionally, as an example, the first indication information indicates a value of the DRX parameter corresponding to the target service.

Optionally, as an example, the first indication information indicates a service type of the target service.

As an embodiment, before the network device generates the first indication information, the processor 910 is configured to determine the DRX parameter corresponding to the target service from the multiple preconfigured DRX parameters according to a service type of the target service and correspondences between service types and DRX parameters.

As an embodiment, information of the service type of the target service includes at least one of: an LCID or logical channel group identifier corresponding to data of the target service, a QoS-Flow-ID of data of the target service, or a DRB carrying data of the target service.

Optionally, as an embodiment, the first indication information is carried in a DCI or a MAC CE.

Optionally, as an embodiment, the processor 910 is further configured to configure the multiple DRX parameters for the terminal device.

FIG. 10 is a schematic structure diagram of a system chip according to an embodiment of the disclosure. The system chip 1000 of FIG. 10 includes an input interface 1001, output interface 1002, processor 1003 and memory 1004 which are connected through a bus 1005. The processor 1003 is configured to execute a code in the memory 1004.

Optionally, when the code is executed, the processor 1003 implements a method executed by a terminal device in the method embodiments. For simplicity, no more elaborations will be made herein.

Optionally, when the code is executed, the processor 1003 implements a method executed by a network device in the method embodiment. For simplicity, no more elaborations will be made herein.

Those of ordinary skill in the art may realize that the units and algorithm operations of each example described in combination with the embodiments disclosed in the disclosure may be implemented by electronic hardware or a combination of computer software and the electronic hardware. Whether these functions are performed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not performed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function is stored in a computer-readable storage medium. Based on such an understanding, the technical solutions of the disclosure substantially or parts making contributions to the related art or part of the technical solutions may be embodied in form of software product, and the computer software product is stored in a storage medium and includes a plurality of instructions configured to enable a computer device (which may be a personal computer, a server, a network device or the like) to execute all or part of the operations of the method in each embodiment of the disclosure. The abovementioned storage medium includes various media capable of storing program codes, such as a U disk, a mobile hard disk, a Read-Only Memory (ROM), a Random Access Memory (RAM), a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims

## Claims

1. A communication method, comprising:
receiving, by a terminal device, first indication information sent by a network device, the first indication information indicating a service type of a target service;
determining, by the terminal device, a Discontinuous Reception, DRX, parameter corresponding to the target service from a plurality of preconfigured DRX parameters according to the service type of the target service and correspondences between service types and DRX parameters, wherein information of the service type of the target service comprises at least one of: a Quality of Service Flow Identifier, QoS-Flow-ID, of data of the target service, or a Data Radio Bearer, DRB, carrying data of the target service, and wherein the plurality of preconfigured DRX parameters are configured by the network device for the terminal device through configuration signaling;
executing (220), by the terminal device, the target service in a DRX manner according to the DRX parameter corresponding to the target service.

2. The method of claim 1, wherein the first indication information indicates an index of the service type of the target service in a plurality of service types.

3. The method of any one of claims 1 to 2, wherein the DRX parameter comprises at least one of: an on duration timer, a DRX-inactivity timer, a DRX-retransmission timer, a long DRX-cycle start offset, a short DRX-cycle, or a DRX-short cycle timer.

4. The method of any one of claims 1 to 3, wherein there is at least one parameter with different values, among DRX parameters corresponding to a plurality of services executable by the terminal device.

5. The method of claim 1, wherein the configuration signaling comprises Radio Resource Control, RRC, signaling.

6. A terminal device, adapted to perform the method according to any one of claims 1 to 5.

7. A computer-readable medium having stored thereon instructions that, when executed on a processor of a terminal device, cause the terminal device to perform steps of the method according to any one of claims 1 to 5.

## Patentansprüche

1. Kommunikationsverfahren, das Folgendes umfasst:
Empfangen, durch eine Endgerätevorrichtung, von durch eine Netzvorrichtung gesendeten ersten Angabeinformationen, wobei die ersten Angabeinformationen eine Dienstart eines Zieldienstes angeben;
Bestimmen, durch die Endgerätevorrichtung, eines Diskontinuierlicher-Empfang-Parameters bzw. DRX-Parameters, entsprechend dem Zieldienst, von einer Vielzahl von vorkonfigurierten DRX-Parametern gemäß der Dienstart des Zieldienstes und Entsprechungen zwischen Dienstarten und DRX-Parametern, wobei Informationen über die Dienstart des Zieldienstes mindestens eines der Folgenden umfassen: eine Dienstqualität-Flusskennung bzw. QoS-Fluss-ID von Daten des Zieldienstes oder einen Datenfunkbearer bzw. DRB, der Daten des Zieldienstes führt, und wobei die Vielzahl von vorkonfigurierten DRX-Parametern durch die Netzvorrichtung für die Endgerätevorrichtung über Konfigurationssignalisierung konfiguriert wird;
Ausführen (220), durch die Endgerätevorrichtung, des Zieldienstes auf eine DRX-Weise gemäß dem DRX-Parameter, der dem Zieldienst entspricht.

2. Verfahren nach Anspruch 1, wobei die ersten Angabeinformationen einen Index der Dienstart des Zieldienstes in einer Vielzahl von Dienstarten angeben.

3. Verfahren nach einem der Ansprüche 1 bis 2, wobei der DRX-Parameter mindestens eines der Folgenden umfasst: einen Einschaltdauer-Timer, einen DRX-Inaktivitäts-Timer, einen DRX-Neuübertragungs-Timer, einen Langer-DRX-Zyklus-Startversatz, einen kurzen DRX-Zyklus oder einen DRX-Kurzzyklus-Timer.

4. Verfahren nach einem der Ansprüche 1 bis 3, wobei es mindestens einen Parameter mit verschiedenen Werten unter den DRX-Parametern gibt, die einer Vielzahl von Diensten entsprechen, die durch die Endgerätevorrichtung ausführbar sind.

5. Verfahren nach Anspruch 1, wobei die Konfigurationssignalisierung Funkressourcensteuerung-Signalisierung bzw. RRC-Signalisierung umfasst.

6. Endgerätevorrichtung, eingerichtet zum Durchführen des Verfahrens nach einem der Ansprüche 1 bis 5.

7. Computerlesbares Medium, das darauf gespeichert Anweisungen aufweist, die bei Ausführung auf einem Prozessor einer Endgerätevorrichtung die Endgerätevorrichtung veranlassen, die Schritte des Verfahrens nach einem der Ansprüche 1 bis 5 durchzuführen.

## Revendications

1. Procédé de communication, comprenant :
la réception, par un dispositif terminal, de premières informations d'indication envoyées par un dispositif de réseau, les premières informations d'indication indiquant un type de service d'un service cible ;
la détermination, par le dispositif terminal, d'un paramètre de réception discontinue, DRX, correspondant au service cible parmi une pluralité de paramètres de DRX préconfigurés conformément au type de service du service cible et de correspondances entre des types de services et des paramètres de DRX, les informations du type de service du service cible comprenant au moins un identifiant de flux de qualité de service, QoS-Flow-ID, de données du service cible, et/ou un support radio de données, DRB, portant des données du service cible, et dans lequel la pluralité de paramètres de DRX préconfigurés est configurée par le dispositif de réseau pour le dispositif terminal par une signalisation de configuration ;
l'exécution (220), par le dispositif terminal, du service cible dans un mode de DRX conformément au paramètre de DRX correspondant au service cible.

2. Procédé selon la revendication 1, dans lequel les premières informations d'indication indiquent un indice du type de service du service cible dans une pluralité de types de services.

3. Procédé selon l'une quelconque des revendications 1 à 2, dans lequel le paramètre de DRX comprend au moins : une minuterie de durée d'activité, et/ou une minuterie d'inactivité de DRX, et/ou une minuterie de retransmission de DRX, et/ou un décalage de début de cycle de DRX long, et/ou un cycle de DRX court, et/ou une temporisation de cycle de DRX court.

4. Procédé selon l'une quelconque des revendications 1 à 3, dans lequel les paramètres de DRX correspondant à une pluralité de services exécutables par le dispositif terminal comportent au moins un paramètre aux valeurs différentes.

5. Procédé selon la revendication 1, dans lequel la signalisation de configuration comprend une signalisation de commande de ressources radio, RRC.

6. Dispositif terminal, adapté pour réaliser le procédé selon l'une quelconque des revendications 1 à 5.

7. Support lisible par ordinateur sur lequel sont mémorisées des instructions qui, à leur exécution sur un processeur d'un dispositif terminal, amènent le dispositif terminal à réaliser des étapes du procédé selon l'une quelconque des revendications 1 à 5.
